# NEW EUROPEAN PATENT SPECIFICATION

(11) **EP 2 685 150 B2**
(45) Date of publication and mention of the opposition decision: **29.06.2022**
(45) Mention of the grant of the patent: 08.07.2015
(21) Application number: 13175585.2
(22) Date of filing: 08.07.2013
(51) Int. Cl.: F16P 3/14, G01S 17/02, G05B 19/18

(54) **Monitoring system and method**
Überwachungssystem und Verfahren
Système et procédé de surveillance

(30) Priority: 09.07.2012 IT RN20120036
(43) Date of publication of application: 15.01.2014
(73) Proprietor: Wide Automation S.r.l., 47842 San Giovanni in Marignano (RN) (IT)
(72) Inventor: Bombini, Luca, 43040 FELEGARA (PARMA) (IT); Buzzoni, Michele, 43013 LANGHIRANO (PARMA) (IT)
(74) Representative: Milli, Simone

(56) References cited:
- EP-A1- 1 586 805
- EP-A1- 2 023 160
- EP-A1- 2 315 052
- EP-A1- 2 386 876
- EP-A1- 2 395 372
- EP-A2- 1 933 167
- WO-A1-2011/089885
- DE-A1- 10 245 720
- DE-A1-102004 043 514
- DE-A1-102004 043 515
- DE-A1-102005 011 143
- DE-A1-102005 063 217
- DE-A1-102007 007 576
- DE-A1-102009 055 990
- DE-B3-102007 009 225
- DE-C1- 19 917 509
- US-A1- 2003 235 331

## Description

This invention relates to a monitoring system and method, in particular of areas close to a machine tool.

In the field of machine tools several systems are know for allowing the monitoring, that is, the supervision, of an area adjacent to a machine tool (which may be used by an operator).

The aim of these monitoring systems is to monitor a predetermined operating area, close to the machine tool, to identify the presence of a person inside the operating area and, if necessary, consequently stop the machine tool.

The above-mentioned supervision systems therefore allow the safety for the operators to be increased as the machine is stopped if an operator approaches the machine under conditions of potential danger.

However, there has been a long felt need for providing a supervision system which is particular reliable, that is to say, in which the generation of undesired alarms is reduced and in which, on the other hand, the risk of failing to identify an operator inside the supervision area is reduced.

Document EP 1 933 167 discloses a 3D scanner which can be operated according to two different methods, that can be used to monitor an operating area.

Document EP 2 023 160 discloses two cameras and an emitting source, which are used to monitor an area.

Document EP 2 386 876 shows a sensor which is light receiver configured as a scanner, that can be used to monitor an area.

Document DE 10 2005 063217 describes a surveillance system for a robot or a machine having two cameras for acquiring a 3D image.

Document EP 1 586 805 discloses a monitoring system having four cameras to acquire single images which are processed separately, in order to identify a plurality of "*virtual objects*".

The aim of this invention is therefore to overcome the above mentioned drawbacks by providing a monitoring system and a monitoring method which are efficient and reliable.

According to the invention, this aim is achieved by a monitoring system and a method comprising the technical features described in one or more of the appended claims.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 shows a schematic view of an application of the monitoring system according to the invention;
- Figure 2 shows a detail of the monitoring system according to the invention;
- Figure 3 shows a diagram of a preferred embodiment of the method according to the invention;
- Figure 4 shows an image acquired using the system according to the invention;
- Figure 5 shows a processing of the image of Figure 4, representing the distance along a direction of moving away substantially parallel to the optical axis of the video cameras.

With reference to the accompanying drawings, the numeral 1 denotes a system for monitoring an area A close to a processing machine M.

It should be noted that the area A has, preferably, a predetermined extension.

Moreover, the area A is preferably positioned in a predetermined position relative to the processing machine M.

The term "processing machine M" is used to mean any machine for carrying out processes or treatments on objects or products, such as, by way of an example, a machine tool.

It should be noted that these machines generally have at least one movable element 2, which usually carries the processing tool.

This movable element 2 comprises an operating head 2 (these two terms are used below without distinction).

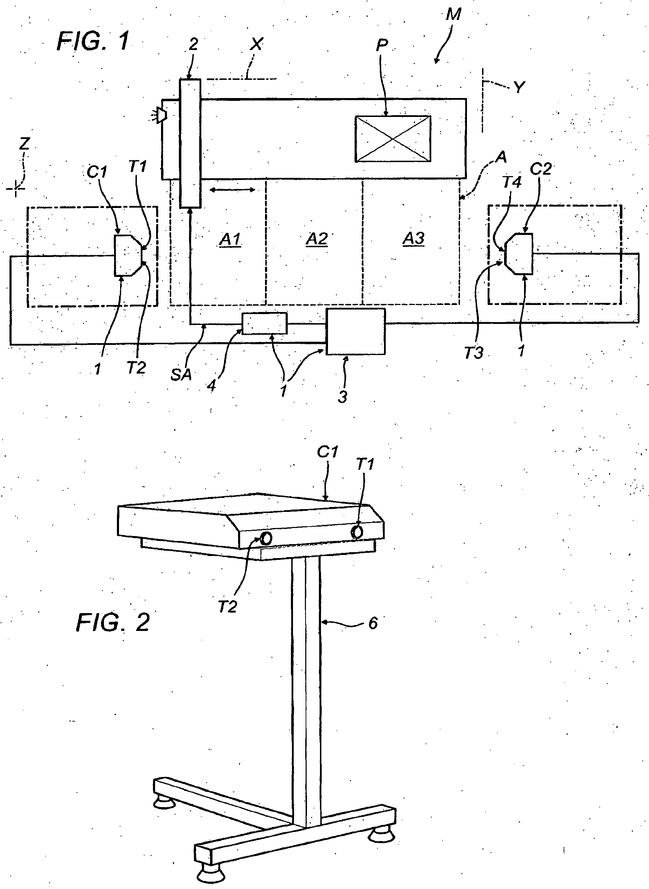

In the example shown in Figure 1 the label P denotes a part being processed and numeral 2 denotes a movable element forming part of the machine M.

It should be noted that the element 2 is movable along a direction X.

The system 1 comprises a first pair C1 of video cameras (T1, T2) positioned, in use, in a predetermined reciprocal position for acquiring 3-dimensional images of the area A.

It should be noted that the video cameras (T1, T2) are positioned in such a way that, in combination, they allow the acquisition of a 3-dimensional image of the area A.

As shown in Figure 2, the system also comprises a second pair C2 of video cameras (T3, T4) positioned, in use, in a predetermined reciprocal position for acquiring images of the area A.

The video cameras (T3, T4) of the second pair C2 are set at an angle relative to the video cameras (T1, T2) of the first pair C1: in other words, the video cameras take images of the area A on different optical paths.

Preferably, the video cameras (T3, T4) are positioned in front of the video cameras (T1, T2), as shown in Figure 2.

It should be noted that the advantages of using the second pair C2 are described in more detail below.

Figure 2 shows a pair C1 of video cameras (T1, T2).

It should be noted that the video cameras (T1, T2) are positioned inside a box-shaped container 5.

Preferably, the box-shaped container 5 comprises a support 6 designed for resting on the ground or for connecting to one or more elements of the machine M.

According to the invention, the system 1 comprises processing means 3, connected to the video cameras (T1, T2) for receiving the images acquired by the video cameras (T1, T2).

The processing means 3 are configured for:
- a) analysing, in combination, the images of the video cameras (T1, T2) for identifying the presence of an object in the area A monitored;
- b) acquiring a position of the movable element (2) in the area A;
- c) providing a signal SA for stopping the machine M as a function of the relative position of the movable element 2 with respect to the object detected in the area A.

It should be noted that step b) for acquiring the position of the movable element 2 in the area A can comprise a reading of the position directly by the machine M or can comprise an analysis of the images acquired by the video cameras to obtain the position of the movable element 2 in the area A.

Preferably, the processing means 3 comprise a computerised unit.

Still more preferably, the system 1 comprises a control unit 4 for interfacing with the machine M connected to the processing means 3 and to the machine M, for receiving the stop signal from the processing means 3 and sending a control signal to the control unit (for example to the PLC) of the machine M.

A preferred embodiment of the system 1 and of the monitoring system actuated by it is described below in detail.

It should be noted that the description of the system 1 and of the method actuated by it must not be considered as limiting the invention but must be considered purely as an example.

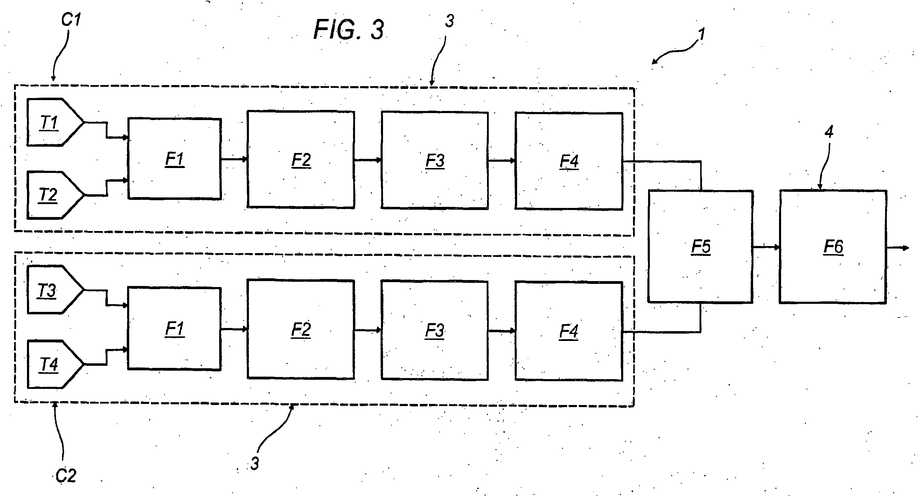

Figure 3 illustrates an example of the method actuated by the system according to the invention.

The steps of the monitoring method actuated with regard to the first pair C1 of video cameras (T1, T2) are described below: with regard to the second pair C2 of video cameras (T3, T4) the same comments made relative to the first pair C1 of video cameras (T1, T2) apply.

The monitoring method comprises (step F1) acquiring a pair of images of the area (A) using at least the two video cameras of the first pair (C1) of video cameras (T1, T2).

The two images are, preferably, synchronised with each other, that is, acquired at the same moment in time.

Subsequently, an analysis is carried out (steps F2 and F3) on the two images acquired for identifying the presence of an object in the area A.

The analysis comprises the generation of a map of the distances (step F2).

The step of generating a map of the distances comprises a step of generating a map, that is, a matrix, on the basis of a comparison between the two images acquired.

The map, or matrix, comprises the position (in the world) of each pixel (or, more generally, portion of the image) with respect to a reference system shared by the two video cameras (T1, T2).

This map is generated on the basis of an analysis of the differences.

Preferably, a map is generated containing the coordinates, in the world (that is, with respect to a reference system shared by the two video cameras), of each pixel.

Preferably, the map contains the coordinates of each pixel in three orthogonal directions:
- a direction X substantially parallel to the optical axes of the video cameras;
- a direction Z substantially orthogonal to the ground in the area;
- a direction Y orthogonal to the previous directions.

Step F3 comprises extracting and classifying the obstacles.

In step F3 the map of the distances for identifying an object in the area A subjected to monitoring is analysed.

The analysis of the map of the distances comprises a step of searching, in the map of the distances, for adjacent portions 01 having substantially the same distance value along the direction X of moving away of the video cameras T1, T2, that is, along the direction which is substantially parallel to the optical axis of the video cameras (T1, T2).

Preferably, the searching step comprises identifying an obstacle in the area A if an adjacent portion 01 of the map comprising same distance values in X has an extension (preferably measured in terms of number of points) greater than a predetermined value (or threshold).

Step F3 can comprise, downstream of the identification of the objects in the area A subjected to monitoring, a step for classifying the objects identified on the basis of dimensional type parameters.

The classifying sub-step comprises a classification of the objects on the basis of dimensional proportions (for example, on the basis of the dimensional proportion between height and width of the region of the image to which an object corresponds on the basis of the analyses performed).

It should be noted that the classification sub-step comprises, advantageously, distinguishing a person from another object.

It is understood that the classification sub-step is optional.

Furthermore, the monitoring method can comprise analysing several images acquired at different moments in time.

In this case, the steps F2 and F3 are performed for several images acquired at different and successive moments in time.

According to this aspect, there is a step for comparing the results of the analyses performed on each pair of images at a given instant to check for the presence of an object in the area in pairs of images taken at successive times.

It should be noted that the monitoring method also comprises an initial step for calibrating the area A to be subjected to monitoring.

The initial calibration step comprises applying "markers" on the perimeter of the area and taking images of the markers so that the system can analyse the images and identify the area A to be monitored.

A preferred embodiment of the method according to this invention is described below.

According to the method, the area A is subdivided into a plurality of regions (A1, A2, A3).

Each region (A1, A2, A3) corresponds to a portion of the area A subjected to monitoring: three different regions (A1, A2, A3) are shown in the example in Figure 1.

According to this embodiment, the analysing step comprises an analysis of the images of the video cameras (T1, T2) to identify in which region (A1, A2, A3) the object identified is positioned (the object is identified by the above-mentioned criteria).

Moreover, the analysing step comprises associating the obstacle detected with the region (A1, A2, A3) identified.

It should be noted that, according to this embodiment, the signal SA for controlling the machine M is provided as a function of the relative position of the movable element 2 relative to the region (A1, A2, A3) identified.

In other words, according to this application example, each region can be configured as:
- "enabled" if a person and the operating head can be present simultaneously in the region without the stop signal being released;
- "prohibited" if a person and the operating head cannot be present simultaneously in the region (this corresponds to a situation of potential danger) and the simultaneous presence of the head and the person in the region causes the release of the alarm signal.

It should therefore be noted that, according to this aspect, the processing means 3 can be configured so that each region (A1, A2, A3) can be configured as "enabled" or "prohibited".

It should be noted that the system 1 (in particular the processing means 3) can be configured in such a way that certain regions can be permanently prohibited or enabled or each region can be enabled or prohibited as a function of the position of the operating head: according to this latter possibility, the presence of the operating head in a region determines the prohibiting of the region whilst its absence determines the enabling of the region.

The following example, relative to Figure 1, will clarify the above.

Figure 1 shows the movable element 9 positioned in the region A1.

The entrance of a person in the region, in which the movable head or the operating head 9 is positioned, causes the machine to stop.

The region A1 is prohibited, as the operating head 9 is present there.

On the other hand, the entrance of a person in the region A3 does not cause the machine to stop as that condition is not the source of a potential danger, since the person in region A3 is quite far from the movable element 9.

It should be noted that the region A3, in the specific example, is enabled as the operating head 2 is not present there.

In this way the system 1 renders active a signal for stopping the machine as a function of the relative position of the movable element 2 and the object (or person) detected.

It should be noted that, generally, the system emits the stop signal if, on the basis of the analysis of the images, the movable element 2 is found to be near the person (object), as detected by analysing the images of the video camera, which corresponds to a situation of potential danger.

This condition of nearness, in the specific case, corresponds to the presence of the movable element 2 and the person (object) detected in the same region (A1, A2, A3), or in the immediately adjacent region (A1, A2, A3).

According to another aspect, the invention comprises a processing (filtering) of the map of the distances, to distinguish objects having a height relative to the ground less than a predetermined value from objects having a height relative to the ground greater than a predetermined value.

Advantageously, this processing prevents alarm signals due to the presence of small objects (limited height from the ground ) in the area A.

Advantageously, the system 1 configured in this way is particularly robust and allows the generation of so-called "false alarms" to be avoided.

More specifically, the presence of the second pair C2 of video cameras (T3, T4) makes the system particularly immune to false alarms, that is, more reliable.

The video cameras (T3, T4) are, preferably, positioned so as to take images from a different angle relative to the video cameras (T1, T2) of the first pair of video cameras.

It should be noted that, as shown in Figure 1, the two pairs (C1, C2) of video cameras (T1, T2, T3, T4) are preferably positioned facing each other.

Advantageously, the use of a second pair C2 of video cameras (T3, T4) avoids potential shadow areas in the zone immediately in front of the video cameras (T1, T2).

In effect, if a person stands in front of the first pair C1 of video cameras (T1, T2) in such a way as to substantially obscure the entire field of view, that person is still detected by the second pair C2 of video cameras (T3, T4) and identified by the system 1, without an alarm or a fault in the monitoring system 1 being generated.

Moreover, the presence of a second pair C2 of video cameras (T1, T2) allows the presence of a person in the area A to be detected even in the presence of other objects in the area A and regardless of the point of entry into the area A.

In effect, where a first person (or object) is present in the area A and a second person enters the area A and positions him/herself permanently in the shadow of the first person with respect to the field of vision of the video cameras T1 and T2 of the first pair C1, the presence of only the first pair C1 of video cameras (T1 and T2) is not sufficient to identify the presence of the second person in the area A.

This results in a condition of potential danger not being identified and the machine M not stopping in a situation of potential danger.

The second pair C2 of video cameras (T3, T4) advantageously allows this problem to be resolved as it allows the images of the area A to be taken using a different optical path with respect to the first pair C1 of video cameras (T1, T2): in this way, in the situation described above, the second person would be detected by the second pair C2 of video cameras (T3, T4) and, therefore, correctly identified by the system 1.

It should be noted that, preferably, in the method of Figure 3 the steps of the monitoring method described above are substantially repeated for the second pair C2 of video cameras (T3, T4).

Preferably, the system comprises a step (step F5) of merging of the signals deriving from the two pairs of video cameras C1 and C2.

It should be noted that the step for merging the signals comprises analysing the status of the signals of the two pairs of video cameras C1 and C2, to release a signal for stopping the machine as a function of the status of both the signals.

The signal for stopping the machine is sent to the interfacing control unit 4, which is connected with the machine M for performing on it a predetermined operation (for example, stopping one or more elements, including the movable element 2).

It should also be noted that the system 1 could also comprise, in addition to the second pair C2, one or more further pairs of video cameras, positioned in such a way as to acquire images of the area A from different angles.

Therefore, more generally, the system 1 could comprise a plurality of pairs of video cameras: in this case, the system would be configured for actuating the method according to this invention on the basis of the images acquired from the plurality of video cameras.

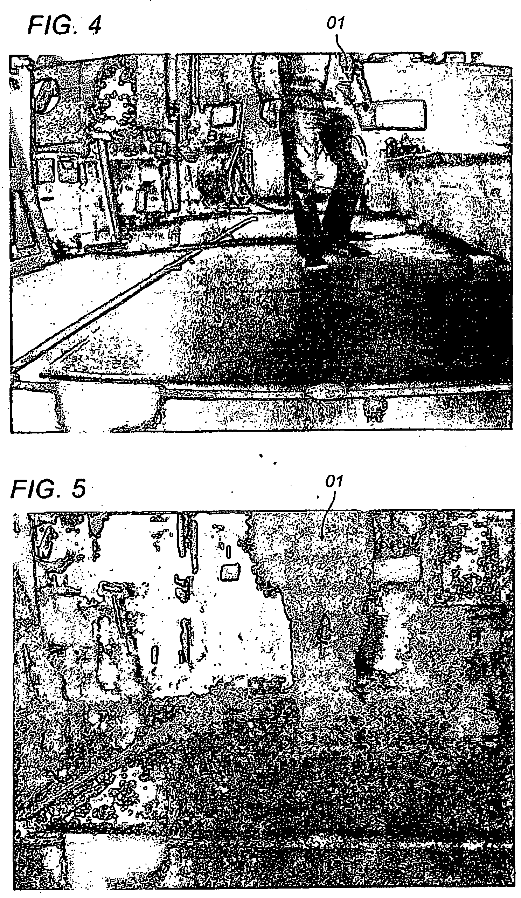

It should be noted that Figure 4 shows an image of the area A subjected to monitoring in which the presence of a person is evident, whilst Figure 5 shows the map of differences along the direction X, in which it is evident that a person corresponds to an adjacent region O1 having substantially the same value of difference.

The invention described herein is susceptible of industrial application and may be modified and adapted in several ways without departing from the scope of the inventive concept. Moreover, all the details of the invention may be substituted by technically equivalent means.

## Claims

1. A system for monitoring an area (A) close to a processing machine (M), with the machine (M) having at least one movable operating head (2) in the area (A) or close to it, **characterised in that** it comprises, in combination:
- a first pair (C1) of video cameras (T1, T2) positioned, in use, in a predetermined reciprocal position for acquiring 3-dimensional images of the area (A);
- a second pair (C2) of video cameras (T3, T4), positioned, in use, in a predetermined reciprocal position for taking 3-dimensional images of the area (A) from a different angle relative to the first pair (C1) of video cameras (T2, T3);
- processing means (3), connected to the video cameras (T1, T2, T3, T4) of the first and second pair for receiving the images and configured for:
- a) analysing, in combination, the images of the video cameras (T1, T2) of the first pair and analysing, in combination, the images of the video cameras (T3, T4) of the second pair for identifying the presence of an object in the area (A),
- b) analysing differences in the images of the first pair (C1) of video cameras (T1, T2) in order to obtain a map of the distances of each pixel relative to a reference system shared by the video cameras (T1, T2) of the first pair (C1) of video cameras (T1, T2);
- c) filtering the map of the distances to distinguish objects having a height relative to the ground less than a predetermined value from objects having a height relative to the ground greater than the predetermined value;
- d) acquiring a position of the operating head (2) in the area (A);
- e) providing a signal (SA) for stopping the machine (M) as a function of the relative position of the operating head (2) with respect to the object detected in the area (A).

2. The system according to claim 1, wherein the processing means (3) are configured for:
- allowing the subdivision of the area (A) into a plurality of regions (A1, A2, A3);
- analysing the images of the video cameras (T1, T2) for identifying in which of the regions (A1, A2, A3) the object is located and associating the object detected with the region (A1, A2, A3) identified;
- providing a signal (SA) for stopping the machine (M) as a function of the relative position of the operating head (2) with respect to the object identified.

3. The system according to claim 2, wherein the processing means (3) are configured for identifying in which region (A1, A2, A3) the operating head (2) is located and providing a signal (SA) for stopping the machine (M) when the operating head (2) and the object identified are located in the same region (A1, A2, A3).

4. The system according to any of the preceeding claims, wherein the video cameras (T3, T4) of the second pair (C2) of video cameras (T3, T4) are positioned facing the video cameras (T1, T2) of the first pair (C1) of video cameras (T1, T2).

5. A method for monitoring an area (A) close to a processing machine (M) having at least one operating head (2), **characterised in that** it comprises the following steps:
- acquiring images of the area (A) by at least a first pair (C1) of video cameras (T1, T2) positioned in a predetermined reciprocal position for acquiring 3-dimensional images of the area (A) and by a second pair (C2) of video cameras (T3, T4), positioned, in use, in a predetermined reciprocal position for taking 3-dimensional images of the area (A) from a different angle relative to the first pair (C1) of video cameras (T2, T3);
- analysing, in combination, the images of the video cameras (T1, T2) of the first pair of video cameras (T1,T2) and analysing, in combination, the images of the second pair of video cameras (T3,T4) for identifying the presence of an object in the area (A), the analyzing step comprising analysing the differences of the images of the video cameras (T1, T2) of the first pair (C1) of video cameras (T1, T2) in order to obtain a map of the distances of each pixel relative to a reference system shared by the video cameras (T1, T2) of the first pair (C1) of video cameras (T1, T2);
- filtering the map of the distances to distinguish objects having a height relative to the ground less than a predetermined value from objects having a height relative to the ground greater than said predetermined value;
- acquiring the position of the operating head (2) in the area (A);
- providing a signal (SA) for stopping the machine (M) as a function of the relative position of the operating head (2) and the object detected in the area (A).

6. The method according to the preceding claim, wherein it comprises a step of subdividing the area (A) into a plurality of regions (A1, A2, A3) and the analysing step comprises analysing the images of the video cameras (T1, T2) for identifying in which region (A1, A2, A3) of the regions (A1, A2, A3) the object is located, the signal (SA) for stopping the machine (M) being provided as a function of the relative position of the operating head (2) with respect to the region (A1, A2, A3) identified.

7. The method according to claim 5 or 6, wherein the analysing step for identifying an object in the area (A) comprises a step of searching in the map for distances of adjacent portions (01) having substantially the same distance value relative to a direction (X) of moving away of the video cameras (T1, T2) substantially parallel to the optical axis of the video cameras (T1, T2).

8. The method according to the preceding claim, wherein the searching step identifies an obstacle in the area (A) if an adjacent portion (01) has an extension greater than a predetermined value.

9. The method according to any one of claims 5 to 8, wherein the analysing step comprises a step for classifying the objects identified on the basis of dimensional type parameters.

10. The method according to any one of claims 5 to 9, wherein the analysing step comprises analysing images of the video cameras (T1, T2, T3, T4), acquired at different instants, for identifying an object if it is present in images taken at subsequent times.

## Patentansprüche

1. System zur Überwachung eines Bereichs (A) in der Nähe einer Bearbeitungsmaschine (M), wobei die Maschine (M) mindestens einen beweglichen Betriebskopf (2) im Bereich (A) oder in dessen Nähe aufweist, **dadurch gekennzeichnet, dass** es in Kombination umfasst:
- ein erstes Paar (C1) Videokameras (T1, T2), die im Betrieb in einer vorgegebenen gegenseitigen Position zur Erfassung dreidimensionaler Bilder des Bereichs (A) positioniert sind;
- ein zweites Paar (C2) Videokameras (T3, T4), die im Betrieb in einer vorgegebenen gegenseitigen Position zum Aufnehmen dreidimensionaler Bilder des Bereichs (A) aus einem anderen Winkel relativ zum ersten Paar (C1) Videokameras (T2, T3) positioniert sind;
- Bearbeitungsmittel (3), die mit den Videokameras (T1, T2, T3, T4) des ersten und des zweiten Paars verbunden sind, um die Bilder zu empfangen, und die ausgelegt sind für:
- a) das Analysieren in Kombination der Bilder der Videokameras (T1, T2) des ersten Paars und das Analysieren in Kombination der Bilder der Videokameras (T3, T4) des zweiten Paars, um die Anwesenheit eines Gegenstands im Bereich (A) zu identifizieren;
- b) das Analysieren von Unterschieden in den Bildern des ersten Paars (C1) Videokameras (T1, T2), um eine Karte der Abstände eines jeden Pixels relativ zu einem gemeinsamen Referenzsystem der Videokameras (T1, T2) des ersten Paars (C1) Videokameras (T1, T2) zu erhalten;
- c) das Filtern der Karte der Abstände, um Gegenstände, die eine Höhe relativ zum Boden aufweisen, die geringer ist als ein vorgegebener Wert, von Gegenständen zu unterscheiden, die eine Höhe relativ zum Boden aufweisen, die größer ist als der vorgegebene Wert;
- d) das Erfassen einer Position des Betriebskopfs (2) im Bereich (A);
- e) das Bereitstellen eines Signals (SA) zum Anhalten der Maschine (M) in Abhängigkeit von der entsprechenden Position des Betriebskopfs (2) relativ zum im Bereich (A) erfassten Gegenstand.

2. System nach Anspruch 1, wobei die Bearbeitungsmittel (3) ausgelegt sind, um:
- die Unterteilung des Bereichs (A) in eine Vielzahl an Regionen (A1, A2, A3) zu erlauben;
- die Bilder der Videokameras (T1, T2) zu analysieren, um zu identifizieren, in welcher der Regionen (A1, A2, A3) sich der Gegenstand befindet, und um den erfassten Gegenstand der identifizierten Region (A1, A2, A3) zuzuordnen;
- ein Signal (SA) zum Anhalten der Maschine (M) in Abhängigkeit von der entsprechenden Position des Betriebskopfs (2) relativ zum identifizierten Gegenstand bereitzustellen.

3. System nach Anspruch 2, wobei die Bearbeitungsmittel (3) ausgelegt sind, um zu identifizieren, in welcher Region (A1, A2, A3) sich der Betriebskopf (2) befindet, und um ein Signal (SA) zum Anhalten der Maschine (M) bereitzustellen, wenn sich der Betriebskopf (2) und der identifizierte Gegenstand in derselben Region (A1, A2, A3) befinden.

4. System nach einem der vorhergehenden Ansprüche, wobei die Videokameras (T3, T4) des zweiten Paars (C2) Videokameras (T3, T4) den Videokameras (T1, T2) des ersten Paars (C1) Videokameras (T1, T2) zugewandt positioniert sind.

5. Verfahren zur Überwachung eines Bereichs (A) in der Nähe einer Bearbeitungsmaschine (M), aufweisend mindestens einen Betriebskopf (2), **dadurch gekennzeichnet, dass** es folgende Schritte umfasst:
- Erfassen von Bildern des Bereichs (A) durch mindestens ein erstes Paar (C1) Videokameras (T1, T2), die in einer vorgegebenen gegenseitigen Position zur Erfassung dreidimensionaler Bilder des Bereichs (A) positioniert sind, und durch ein zweites Paar (C2) Videokameras (T3, T4), die im Betrieb in einer vorgegebenen gegenseitigen Position zum Aufnehmen dreidimensionaler Bilder des Bereichs (A) aus einem anderen Winkel relativ zum ersten Paar (C1) Videokameras (T2, T3) positioniert sind;
- Analysieren in Kombination der Bilder der Videokameras (T1, T2) des ersten Paars Videokameras (T1, T2) und Analysieren in Kombination der Bilder des zweiten Paars Videokameras (T3, T4), um die Anwesenheit eines Gegenstands im Bereich (A) zu identifizieren, wobei der Schritt zum Analysieren das Analysieren der Unterschiede der Bilder der Videokameras (T1, T2) des ersten Paars (C1) Videokameras (T1, T2) umfasst, um eine Karte der Abstände eines jeden Pixels relativ zu einem gemeinsamen Referenzsystem der Videokameras (T1, T2) des ersten Paars (C1) Videokameras (T1, T2) zu erhalten;
- Filtern der Karte der Abstände, um Gegenstände, die eine Höhe relativ zum Boden aufweisen, die geringer ist als ein vorgegebener Wert, von Gegenständen zu unterscheiden, die eine Höhe relativ zum Boden aufweisen, die größer ist als der vorgegebene Wert;
- Erfassen der Position des Betriebskopfs (2) im Bereich (A);
- Bereitstellen eines Signals (SA) zum Anhalten der Maschine (M) in Abhängigkeit von der entsprechenden Position des Betriebskopfs (2) und des im Bereich (A) erfassten Gegenstands.

6. Verfahren nach dem vorhergehenden Anspruch, wobei es den Schritt des Unterteilens des Bereichs (A) in eine Vielzahl an Regionen (A1, A2, A3) umfasst, und wobei der Schritt zum Analysieren das Analysieren der Bilder der Videokameras (T1, T2) umfasst, um zu identifizieren, in welcher Region (A1, A2, A3) der Regionen (A1, A2, A3) sich der Gegenstand befindet, wobei das Signal (SA) zum Anhalten der Maschine (M) in Abhängigkeit von der entsprechenden Position des Betriebskopfs (2) relativ zur identifizierten Region (A1, A2, A3) bereitgestellt wird.

7. Verfahren nach Anspruch 5 oder 6, wobei der Schritt zum Analysieren zum Identifizieren eines Gegenstands im Bereich (A) einen Schritt umfasst, um in der Karte nach Abständen benachbarter Abschnitte (01), aufweisend im Wesentlichen denselben Abstandswert relativ zu einer Richtung (X), zu suchen, die sich von den Videokameras (T1, T2) wegführend im Wesentlichen parallel zur optischen Achse der Videokameras (T1, T2) bewegt.

8. Verfahren nach dem vorhergehenden Anspruch, wobei der Schritt zum Suchen ein Hindernis im Bereich (A) identifiziert, wenn ein benachbarter Abschnitt (01) eine Ausdehnung aufweist, die größer ist als ein vorgegebener Wert.

9. Verfahren nach einem der Ansprüche 5 bis 8, wobei der Schritt zum Analysieren einen Schritt umfasst, um die identifizierten Gegenstände auf der Grundlage von Parametern vom Dimensionaltyp einzuordnen.

10. Verfahren nach einem der Ansprüche 5 bis 9, wobei der Schritt zum Analysieren das Analysieren von Bildern der Videokameras (T1, T2, T3, T4), die in unterschiedlichen Augenblicken erfasst wurden, umfasst, um einen Gegenstand zu identifizieren, wenn dieser in den zu aufeinanderfolgenden Zeiten aufgenommenen Bildern vorhanden ist.

## Revendications

1. Système de surveillance d'une zone (A) située à proximité d'une machine de traitement (M), la machine (M) ayant au moins une tête de fonctionnement mobile (2) dans la zone (A) ou à proximité de celle-ci, **caractérisé en ce qu'**il comprend, en combinaison :
- une première paire (C1) de caméras vidéo (T1, T2) placées, en fonctionnement, dans une position réciproque prédéfinie pour acquérir des images tridimensionnelles de la zone (A) ;
- une seconde paire (C2) de caméras vidéo (T3, T4), placées, en fonctionnement, dans une position réciproque prédéfinie pour prendre des images tridimensionnelles de la zone (A) d'un angle différent par rapport à la première paire (C1) de caméras vidéo (T2, T3) ;
- des moyens de traitement (3) reliés aux caméras vidéo (T1, T2, T3, T4) des première et seconde paires servant à recevoir les images et configurés pour :
- a) analyser, en combinaison, les images des caméras vidéo (T1, T2) de la première paire et analyser, en combinaison, les images des caméras vidéo (T3, T4) de la seconde paire pour identifier la présence d'un objet dans la zone (A) ;
- b) analyser des différences dans les images de la première paire (C1) de caméras vidéo (T1, T2) afin d'obtenir une cartographie des distances de chaque pixel par rapport à un système de référence partagé par les caméras vidéo (T1, T2) de la première paire (C1) de caméras vidéo (T1, T2) ;
- c) filtrer la cartographie des distances pour distinguer les objets ayant une hauteur par rapport au sol inférieure à une valeur prédéfinie des objets ayant une hauteur par rapport au sol supérieure à la valeur prédéfinie ;
- d) acquérir une position de la tête de fonctionnement (2) dans la zone (A) ;
- e) émettre un signal (SA) pour arrêter la machine (M) en fonction de la position relative de la tête de fonctionnement (2) par rapport à l'objet détecté dans la zone (A).

2. Système selon la revendication 1, dans lequel les moyens de traitement (3) sont configurés pour :
- permettre la subdivision de la zone (A) en une pluralité de secteurs (A1, A2, A3) ;
- analyser les images des caméras vidéo (T1, T2) afin d'identifier dans quel secteur (A1, A2, A3) se trouve l'objet et associer l'objet détecté au secteur (A1, A2, A3) identifié ;
- émettre un signal (SA) pour arrêter la machine (M) en fonction de la position relative de la tête de fonctionnement (2) par rapport à l'objet identifié.

3. Système selon la revendication 2, dans lequel les moyens de traitement (3) sont configurés pour identifier dans quel secteur (A1, A2, A3) se trouve la tête de fonctionnement (2) et émettre un signal (SA) pour arrêter la machine (M) lorsque la tête de fonctionnement (2) et l'objet identifié se situent dans le même secteur (A1, A2, A3).

4. Système selon l'une quelconque des revendications précédentes, dans lequel les caméras vidéo (T3, T4) de la seconde paire (C2) de caméras vidéo (T3, T4) sont positionnées face aux caméras vidéo (T1, T2) de la première paire (C1) de caméras vidéo (T1, T2).

5. Procédé de surveillance d'une zone (A) située à proximité d'une machine de traitement (M) ayant au moins une tête de fonctionnement (2), **caractérisé en ce qu'**il comprend les étapes suivantes :
- acquérir des images de la zone (A) par au moins une première paire (C1) de caméras vidéo (T1, T2) placées dans une position réciproque prédéfinie pour acquérir des images tridimensionnelles de la zone (A) et par une seconde paire (C2) de caméras vidéo (T3, T4), placées, en fonctionnement, dans une position réciproque prédéfinie pour prendre des images tridimensionnelles de la zone (A) d'un angle différent par rapport à la première paire (C1) de caméras vidéo (T2, T3) ;
- analyser, en combinaison, des images des caméras vidéo (T1, T2) de la première paire de caméras vidéo (T1, T2) et analyser, en combinaison, des images de la seconde paire de caméras vidéo (T3, T4) pour identifier la présence d'un objet dans la zone (A), l'étape d'analyse comprenant l'analyse des différences des images des caméras vidéo (T1, T2) de la première paire (C1) de caméras vidéo (T1, T2) afin d'obtenir une cartographie des distances de chaque pixel par rapport à un système de référence partagé par les caméras vidéo (T1, T2) de la première paire (C1) de caméras vidéo (T1, T2) ;
- filtrer la cartographie des distances pour distinguer les objets ayant une hauteur par rapport au sol inférieure à une valeur prédéfinie des objets ayant une hauteur par rapport au sol supérieure à ladite valeur prédéfinie ;
- acquérir la position de la tête de fonctionnement (2) dans la zone (A) ;
- émettre un signal (SA) pour arrêter la machine (M) en fonction de la position relative de la tête de fonctionnement (2) et de l'objet détecté dans la zone (A).

6. Procédé selon la revendication précédente, dans lequel il comprend une étape consistant à subdiviser la zone (A) en une pluralité de secteurs (A1, A2, A3) et l'étape d'analyse comprend l'analyse des images des caméras vidéo (T1, T2) afin d'identifier dans quel secteur (A1, A2, A3) des secteurs (A1, A2, A3) se trouve l'objet, le signal (SA) pour arrêter la machine (M) étant émis en fonction de la position relative de la tête de fonctionnement (2) par rapport au secteur (A1, A2, A3) identifié.

7. Procédé selon la revendication 5 ou 6, dans lequel l'étape d'analyse servant à identifier un objet dans la zone (A) comprend une étape consistant à rechercher dans la cartographie des distances de parties adjacentes (01) ayant substantiellement la même valeur de distance par rapport à une direction (X) d'éloignement des caméras vidéo (T1, T2) substantiellement parallèle à l'axe optique des caméras vidéo (T1, T2).

8. Procédé selon la revendication précédente, dans lequel l'étape de recherche identifie un obstacle dans la zone (A) si une partie adjacente (01) possède une extension supérieure à une valeur prédéfinie.

9. Procédé selon l'une quelconque des revendications 5 à 8, dans lequel l'étape d'analyse comprend une étape consistant à classer les objets identifiés sur la base de paramètres de type dimensionnel.

10. Procédé selon l'une quelconque des revendications 5 à 9, dans lequel l'étape d'analyse comprend l'analyse des images des caméras vidéo (T1, T2, T3, T4), acquises à des instants différents, pour identifier un objet si celui-ci est présent dans les images prises à des instants ultérieurs.
